Europäisches Patentamt

European Patent Office

Office européen des brevets

(19)

(11) **EP 0 753 738 A1**

(12) **EUROPÄISCHE PATENTANMELDUNG**

(43) Veröffentlichungstag:
 **15.01.1997 Patentblatt 1997/03**

(51) Int. Cl.⁶: **G01N 27/407**

(21) Anmeldenummer: 96109349.9

(22) Anmeldetag: **11.06.1996**

(84) Benannte Vertragsstaaten:
 **CH DE FR GB LI NL**

(30) Priorität: **14.07.1995 DE 19525764**

(71) Anmelder: **SIEMENS MATSUSHITA COMPONENTS GmbH & CO KG 81541 München (DE)**

(72) Erfinder:
 • **Feltz, Adalbert, Prof. Dr. habil. A-8530 Deutschlandsberg (AT)**
 • **Ottlinger, Marion, Dr.rer.nat. A-8530 Deutschlandsberg (AT)**

(74) Vertreter: **Fuchs, Franz-Josef, Dr.-Ing. et al Postfach 22 13 17 80503 München (DE)**

(54) **CO2-Sensor**

(57) Die Erfindung betrifft einen $CO_2$-Sensor auf elektrochemischer Basis. Er besteht aus einer, eine hohe Alkaliionen-Leitfähigkeit aufweisenden Festelektrolytkeramik (1), vorzugsweise einer Verbindung des NASICON-Strukturtyps, in die Eisen(III) eingebaut ist. Die Festelektrolytkeramik (1) ist mit zwei Elektroden (2, 3) versehen, von denen zumindest eine flächenhaft und hinsichtlich $CO_2$ zumindest teildurchlässig ausgebildet ist. Die Festelektrolytkeramik (1) erhält ihre $CO_2$-Sensitivität durch galvanische Polarisation, die mit der anodischen Oxidation von Eisen(III) zu Eisen(IV) und der Freisetzung von $Na^+$-Ionen verbunden ist, wobei letztere im Bereich der Kathode (2) im Kontakt mit Luft eine geringe Menge $Na_2CO_3$ bilden. Bedingt durch das vergleichsweise hohe Redoxpotential von Eisen(III) erweist sich die NASICON-Festelektrolytkeramik (1) gegenüber der durch Polarisation erzeugten geringen Menge $Na_2CO_3$ als beständig, was den stabilen $CO_2$-Sensor ermöglicht.

FIG 1

$$CO_2 + 1/2\, O_2 + 2e + 2\,Na+$$

$$Na_2\,CO_3$$

$$Na_2ZrFe^{III}(PO_4)_3$$
Keramik
$$\leftarrow 2Na^+ \longrightarrow$$

$$Na_2ZrFe^{III}(PO_4)_3$$

$$2Na^+ + 2e + 2NaZrFe^{IV}(PO_4)_3$$

$$\leftarrow 2e \longrightarrow \quad \leftarrow 2e \longrightarrow$$

Zellreaktion:

Polarisation

$$CO_2 + 1/2\, O_2 + 2\, Na_2ZrFe^{III}(PO_4)_3 \rightleftharpoons Na_2CO_3 + 2\, NaZrFe^{IV}(PO_4)_3$$

Depolarisation

**Beschreibung**

Die Erfindung betrifft einen $CO_2$-Sensor nach dem Oberbegriff des Patentanspruchs 1 sowie eine Meßschaltungsanordnung unter Verwendung eines derartigen Sensors.

Es handelt sich dabei um einen Sensor zur $CO_2$-Gehaltsbestimmung in Gasen. Derartige Sensoren sind zur Steuerung der Luftgüte in geschlossenen Räumen oder der Zusammensetzung der Luft in Gewächshäusern, zur Ermittlung von Umsetzungsraten chemischer Reaktionen unter Beteiligung von $CO_2$ und im Bereich der medizinischen Diagnostik sowie z.B. in der Umweltkontrolle zur Registrierung von Schwankungen des $CO_2$-Gehalts in der Erdatmosphäre von Interesse.

Elektrochemische Anordnungen zur Messung des $CO_2$-Partialdrucks von Luft oder anderen Gasmischungen sind auf der Basis von $Na^+$-ionenleitenden Festelektrolytkeramiken bekannt geworden, beispielsweise unter Verwendung von β-Aluminiumoxid oder von Substanzen des NASICON-Systems $Na_{1+3x}Zr_2(PO_4)_{3-3x}(SiO_4)_{3x}$ mit $0<x<1$, indem die beiderseitig mit einer Ableitelektrode, im allgemeinen bestehend aus einem Edelmetall, beispielsweise Platin, versehene Oberfläche einseitig mit einer Schicht eines geeigneten Carbonates, beispielsweise $Na_2CO_3$, überzogen wird. Bei hinreichend hoher Temperatur ergibt sich eine reversible Einstellung eines potentialbildenden Gleichgewichts

$$Na_2CO_3 <=> 2\ Na^+ + 1/2\ O_2 + CO_2,$$

und zwar durch den Übertritt von $Na^+$-Ionen in den Festelektrolyten bei gleichzeitiger Abgabe von Elektronen und Freisetzung von Sauerstoff und $CO_2$. Aufgrund der hohen Beweglichkeit der $Na^+$-Ionen im Festelektrolyten resultiert daraus im Bereich der Gegenelektrode in Gegenwart von Luft unter Elektronenaufnahme die Bildung von $Na_2CO_3$ in fester Losung in der Festelektrolytkeramik Eine solche Anordnung weist eine elektromotorische Kraft (EMK) auf, die vom $CO_2$-Partialdruck der Umgebung abhängt und demzufolge Sensorfunktion besitzt (siehe z.B. Solid State Ionics 23 (1987) S. 107-112). Neben diskreten Sensorelementen sind auch miniaturisierte Anordnungen bekannt. Diese sind unter Anwendung etablierter Technologien, wie der Dickfilmtechnik, in einer den Anforderungen der Mikrosystemtechnik entsprechenden Weise gefertigt (siehe z.B. Micro System Technologies, 10.-13. September 1990 Berlin, S. 1-6; Solid State Ionics 53-56 (1992) S. 80-84; J. Electrochemical Soc. 139 (1992), Seiten 1384-1388; Journal of Materials Science 28 (1993), Seiten 2035 bis 2039).

Nachteilig ist bei derartigen Sensoren, daß der Sensoreffekt erst bei relativ hoher Temperatur (mindestens 500°C) zum Tragen kommt, so daß das für eine hinreichende Langzeitstabilität erforderliche lokale Gleichgewicht zwischen $Na_2CO_3$ und der $Na^+$-ionenleitenden Festelektrolytkeramik nicht mehr gegeben ist. Das System befindet sich weitab vom chemischen Gleichgewicht. Carbonate wie $Na_2CO_3$ greifen die bisher für die Festelektrolytkeramik vorgeschlagenen Substanzen im Sinne eines chemischen Aufschlusses insbesondere bei erhöhter Temperatur destruktiv an, was die Lebensdauer und die Zeit für eine stabile Anzeige gültiger Meßwerte stark herabsetzt.

Der Erfindung liegt die Aufgabe zugrunde, einen $CO_2$-Sensor hoher Langzeitstabilität anzugeben, der bei niedrigerer Temperatur bis hinunter zu Raumtemperatur anspricht.

Diese Aufgabe wird bei einem $CO_2$-Sensor der eingangs genannten Art erfindungsgemäß durch die Merkmale der kennzeichnenden Teile des Patentanspruchs 1 gelöst.

Weiterbildungen der Erfindung sind Gegenstand von Unteransprüchen.

Ausgehend von einem eine hohe Alkaliionen-Leitfähigkeit aufweisenden Festelektrolytkeramik-Körper wird erfindungsgemäß erreicht, daß sich die der Keramik zugrundeliegende Verbindung z.B. bei 300°C, der Arbeitstemperatur des Sensors, gegeüber $Na_2CO_3$ als stabil erweist und der Festelektrolytkeramik-Körper mit zwei Elektroden aus hinsichtlich der Festelektrolytkeramik inertem Metall versehen ist, von denen zumindest eine flächenhaft und hinsichtlich $CO_2$ zumindest teildurchlässig ausgebildet ist.

In der Festelektrolytkeramik kann anstelle von Natrium auch ein anderes Alkalimetall, vor allem Kalium oder Lithium verwendet werden. Allerdings weist Natrium die höchste Ladungsträgerbeweglichkeit auf.

Als Material für die Elektroden empfiehlt sich ein Edelmetall, vor allem Platin. Es wird bewußt darauf verzichtet, ein Carbonat wie zum Beispiel $Na_2CO_3$ im Elektrodenbereich der Festelektrolytkeramik separat einzusetzen.

Das Wesen der Erfindung besteht darin, daß eine für die $CO_2$-Sensitivität äußerst geringe Menge $Na_2CO_3$ an den Korngrenzen der alkaliionenleitenden Festelektrolytkeramik im Bereich der einen teildurchlässigen Elektrode durch eine von außen angelegte Spannung bzw. einen Spannungsimpuls oder eine Folge von Spannungsimpulsen galvanisch erzeugt wird, dadurch die $CO_2$-Sensorfunktion hervorgerufen wird und immer wieder erneut eingestellt werden kann und die alkaliionenleitende Festelektrolytkeramik, z.B. vom NASICON-Typ mit der Zusammensetzung $Na_{2+x}Fe^{III}_{1+x}Zr_{1-x}(PO_4)_3$ mit $O < x < 0,5$ oder $Na_3Fe^{III}Sc(PO_4)_3$, die in Form einer Tablette mit wenigen Millimeter Durchmesser und 0,5 bis 3 Millimeter Dicke oder in Form einer siebgedruckten Schicht auf einem Substrat, z.B. $Al_2O_3$-Keramik, oder in Gestalt einer dünnen selbsttragenden Folie zur Anwendung gelangt, sich bei der Arbeitstemperatur des Sensors gegenüber der geringen durch galvanische Polarisation erzeugten $Na_2CO_3$-Menge als stabil erweist.

Weiterhin wird erfindungsgemäß die Erzeugung der $CO_2$-Sensitivität durch eine bestimmte festkörperelektrochemische Reaktion herbeigeführt, indem Übergangsmetallkationen durch gekoppelte isomorphe Substitution in die NASICON-Struktur eingeführt werden, die aufgrund ihrer verschiedenen Oxidationsstufen im Prozeß der galvanischen Polarisation eine definierte anodische Oxidation ermöglichen, in deren Ergebnis $Na^+$-Ionen, z.B. entsprechend

$$2Na_3FE^{III}Sc(PO_4)_3 < = > 2\ Na_2Fe^{IV}Sc(PO_4)_3 + 2\ Na^+. + 2\ e$$

freigesetzt werden, die durch die Festelektrolytkeramik zur Katode wandern, um dort unter Elektronenaufnahme aus der teildurchlässigen Elektrode und dem Luftsauerstoff und $CO_2$ entsprechend

$$2\ Na^+ +2\ e +1/2\ O_2 +CO_2 < = > Na_2CO_3$$

Natriumcarbonat im Zwischenkornbereich der Keramik zu bilden.

$Na^+$-ionenleitende Festelektrolytkeramiken vom NASICON-Typ mit dem Redoxpaar CoII/CoIII entsprechend dem Redoxgleichgewicht

$$2\ Na_3Co^{II}Zr(PO_4)_3 < = > 2\ Na_2Co^{III}Zr(PO_4)_3 + 2\ Na^+ + 2\ e$$

oder mit dem Redoxpaar MnII/MnIII entsprechend

$$Na_3Mn^{II}Zr(PO_4)_3 < = > Na_2Mn^{III}Zr(PO_4)_3 + 2\ Na^+ +2\ e$$

ermöglichen im Prozeß der galvanischen Polarisation gleichfalls eine definierte anodische Oxidation unter Freisetzung von $Na^+$-Ionen für die $Na_2CO_3$-Bildung im Bereich der Kathode. Die Verbindungen $Na_3Co^{II}Zr(PO_4)_3$ und $Na_3Mn^{II}Zr(PO_4)_3$ unterliegen aber in Gegenwart der geringen $Na_2CO_3$-Menge bei 300°C, der häufig angewandten Arbeitstemperatur des Sensors, an der Luft der oxidativen Zersetzung, d.h. aufgrund des relativ niedrigen Redoxpotentials von $Co^{II}/Co III$ bzw. von $Mn^{II}/Mn^{III}$ wird die Tendenz zur Zersetzung der NASICON-Struktur durch $Na_2CO_3$ zusätzlich gefördert und Lanzeitstabilität ist nicht gewählrleistet.

In weiterer Ausgestaltung der Erfindung wird dieser Nachteil durch die Einführung von Eisen in die NASICON-Struktur, bedingt durch das wesentlich höhere Redoxpotential FeIII/FeIV, beseitigt, wobei die Langzeitstabilität einer solchen Keramik in Gegenwart von $Na_2CO_3$ an Luft selbst bei erhöhter Temperatur, z.B. 300°C, gegeben ist.

Die Präparation von Verbindungen des NASICON-Typs mit $Fe^{III}$-Kationen, z.B. der Reihe

$$Na_{2+x}Fe^{III}_{1+x}Zr_{1-x}(PO_4)_3\ \text{mit}\ 0 < x > 0,5$$

oder

$$Na_3Fe^{III}Sc(PO_4)_3$$

ist bereits bekannt.

Beispielsweise ist die Verbindung $Na_3Fe^{III}Sc(PO_4)_3$ als Bestandteil der Mischkristallreihe $Na_3Fe^{III}_{2x}Sc_{1-2x}(PO_4)_3$ bereits beschrieben worden. Die Darstellung erfolgt auf dem Weg der thermischen Umsetzung einer Mischung von $Sc_2O_3$, $Fe_2O_3$ mit $NH_4H_2PO_4$ und $Na_2CO_3$ bei 600 bis 800°C. Die Darstellung von Verbindungen der Reihe $Na_{2+x}Fe^{III}_{1+x}Zr_{1-x}(PO_4)_3$, z.B. $Na_2Fe^{III}Zr(PO_4)_3$ und $Na_{2,5}Fe^{III}_{1,5}Zr_{0,5}(PO_4)_3$ (x = 0 bzw. 0,5) ist bisher gleichfalls auf dem Wege der thermischen Umsetzung einer heterogenen Mischung der entsprechenden Ausgangsstoffe erfolgt.

Aufgrund des inkongruenten Schmelzens der Verbindungen, das je nach Substanz im Bereich von 1000 bis 1100°C einsetzt, ist die für eine thermische Synthese der reinen einphasigen Verbindungen nutzbare Temperatur nach oben relativ begrenzt. Es ist daher vorteilhaft, die Präparation durch homogene Fällung aus der Lösung vorzunehmen, die eine moleculardisperse Teilchenverteilung und eine erhöhte Reaktivität der Fällungsprodukte gegenüber oxidischen Ausgangsstoffen ermöglicht. Auf diesem Weg sind homogene Projekte leichter zugänglich. Diese Darstellungsweise umfaßt folgende Schritte:

- Auswahl und Charakterisierung von geeigneten, in Wasser löslichen Ausgangsstoffen,
- Ansetzen definierter Lösungen,
- Umsetzung dieser Lösungen,
- Eindampfen des Reaktionsgemisches,
- Vermahlen des Pulvergemisches,
- Kalzinierung der Proben zur Entfernung flüchtiger Komponenten,
- Erneutes Vermahlen der vorgesinterten Produkte,
- Verpressen der Pulverprodukte zu Tabletten unter Verwendung eines Preßhilfsmittels,
- Endsinterung dieser Tabletten.

Die Formgebung der alkaliionenleitenden Festelektrolytkeramik kann auch durch Schlickerbildung nach einer Folientechnik, anschließendem Aufbringen der Elektroden und Sintern oder in der Schichtfolge Elektrode/Keramik/Elektrode durch ein Verfahren der Dickschichttechnik auf einem Substrat, zum Beispiel $Al_2O_3$, $SiO_2$ oder Mullit vorgenommen werden. Die Sensoreigenschaft entsteht erst im Ergebnis der Polarisation als eine EMK aufgrund sehr geringer stofflicher Veränderungen im Bereich der Elektroden, und sie klingt als Depolarisationsstrom während der Funktion als $CO_2$-Sensor ab, wobei es aufgrund des Langzeitcharakters der elektrochemischen Rückreaktion zur Ausbildung eines zeitlichen Plateaus der EMK kommt.

Im Unterschied zu statischen Anordnungen nach dem Stand der Technik vermeidet ein derartiger dynamischer Sensor die separate Belegung des Festelektrolyten mit einer $Na_2CO_3$-Schicht. Destruktive Zerstörung des Festelektrolyten tritt nicht ein. Dies geschieht dadurch, daß beim Anlegen der Polarisationsspannung eine äußerst geringe Menge $Na_2CO_3$ im Bereich der einen teildurchlässigen Elektrode an den Korngrenzen in einem so engen Kontakt mit der alkaliionenleitenden Festelektrolytkeramik gebildet wird, daß reversible Gleichgewichtseinstellung bereits bei 300°C und darunter möglich ist und eine Festelektrolytkeramik, bestehend aus $Na_3Fe^{III}Sc(PO_4)_3$ oder einer Verbindung der Reihe $Na_{2+x}Fe^{III}_{1+x}Zr_{1-x}(PO_4)_3$, z.B. $Na_2Fe^{III}Zr(PO_4)_3$ oder $Na_{2,5}FE^{III}_{1,5}Zr_{0,5}(PO_4)_3$, zur Anwendung gelangt, die sich unter diesen Bedingungen an Luft gegenüber der äußerst geringen Menge $Na_2CO_3$ als stabil erweist.

Die durch Polarisation der alkaliionenleitenden Keramik erzeugte EMK weist ein im Rahmen der für galvanische Zellen allgemein gültigen Gesetzmäßigkeit, wie sie in der Nernstschen Gleichung enthalten ist, eine Temperaturabhängigkeit auf. Bei Einsatz des $CO_2$-Sensors unter variablen Temperaturbedingungen empfiehlt es sich deshalb eine temperaturabhängige Korrektur der Anzeige bzw. der Meßwerte, beispielsweise durch einen zugeordneten Mikroprozessor in Kombination mit einem Temperaturfühler, wie einem Thermistor oder Platin-Widerstandselement, zur Steuerung der Heizvorrichtung vorzusehen, die den Sensor auf wenigstens nahezu konstanter Temperatur hält. Auch die durch Polarisation erzeugte EMK kann auf diese Weise durch bestimmte Sollwerte vorgegeben werden. Lösungen zur Einstellung definierter Betriebsbedingungen sind in der Sensorik bekannt. Angaben dazu sind in der Applikations- und Schaltungsinformation 4 (1988) der UNITRONIC GmbH in Dusseldorf über den FIGARO-Gassensor TGS 203 zum Nachweis von CO enthalten, der auf der Leitfähigkeitsänderung eines Oxidhalbleiters beruht.

Nachstehend wird die Erfindung anhand von Ausführungsbeispielen näher erläutert. Es zeigt:

Figur 1  eine Ausführungsform eines erfindungsgemäßen Sensors im Fall der Anwendung von $Na_2Fe^{III}Zr(PO_4)_3$ als Festelektrolytkeramik.;

Figur 2  ein Diagramm des zeitlichen Verhaltens der EMK in Volt als Funktion der Zeit t in Minuten von zylinderförmigen Sinterpreßlingen aus $Na_2Fe^{III}Zr(PO_4)_3$;

Figur 3  ein Diagramm der zeitlichen Abhängigkeit der EMK für eine $Na_2Fe^{III}Zr(PO_4)_3$-Keramik und

Figur 4  eine Ausführungsform eines erfindungsgemäßen $CO_2$-Sensors.

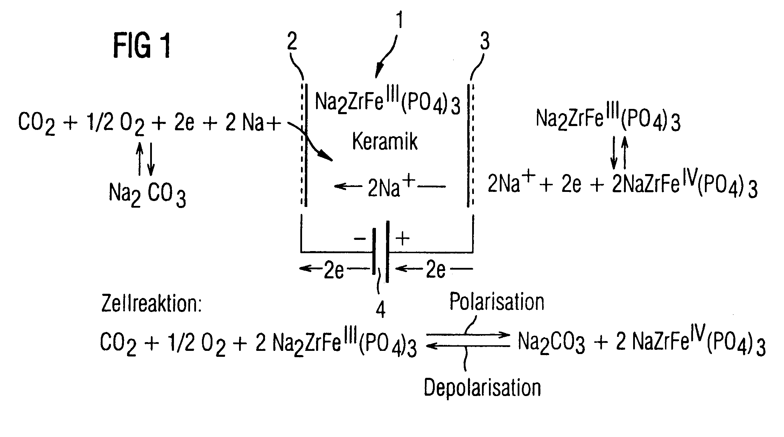

Figur 1 zeigt als Beispiel den Funktionsablauf für einen erfindungsgemäßen Sensor im Fall der Anwendung von $Na_2Fe^{III}Zr(PO_4)_3$ als Festelektrolytkeramik. Es ist ein Festelektrolytkeramik-Körper 1 mit Elektroden 2, 3 aus Platin vorgesehen, von denen mindestens eine Elektrode 2 für $CO_2$ teildurchlässig ist. Die Festelektrolytkeramik wird mittels einer Spannungsquelle 4 polarisiert. Bei Depolarisation entsteht an den Elektroden 2, 3 eine EMK.

Die Herstellung der Keramik erfolgt in der Weise, daß $(NH_4)H_2PO_4$, $Na_2CO_3$, $F(NO_3)_3$ $9H_2O$ im Molverhältnis 3 zu 1 zu 1 in verdünnter $HNO_3$ gelöst werden. Die Lösung geht beim Zutropfen einer äquivalenten Menge Zirconium-acetylacetonat in einen gelartigen Zustand über. Durch Eindampfen der Lösung wird ein Rückstand erhalten, der durch stufenweises Erhitzen bis auf 850°C und 5-stündiges Halten bei dieser Temperatur ein Pulver ergibt, welches nach der Verarbeitung zum Granulat und anschließender Preßverdichtung durch Sintern bei 1000°C (bis zu 40 Stunden) in eine Keramik mit 80% der theoretischen Dichte umgewandelt wird. Die Kontaktierung durch Aufbringen der Platin-Elektroden 2, 3 erfolgt durch Bestreichen mit einer Platinpaste und deren Einbrennen bei 800°C. Bei der Polarisation führt die Anodenreaktion zur Bildung einer sehr geringen Menge $NaFe^{IV}Zr(PO_4)_3$ + $Na^+$-Ionen, die durch den Festelektrolytkeramik-Körper hindurch zur Kathode wandern. Ihre elektrochemische Entladung und Reaktion mit Luft führt zur Bildung von $Na_2CO_3$ entlang der Korngrenzen im Katodenbereich. Bei der Depolarisation, dem Betrieb als $CO_2$-Sensor entspricht die vom $CO_2$-Partialdruck abhängige EMK der spontanen Triebkraft der Reaktion in umgekehrter Richtung. Durch das sich an der teildurchlässigen Elektrode 2 einstellende elektrochemische Gleichgewicht wird nach der Beendigung des Polarisationsvorgangs mittels der hier jetzt vorliegenden sehr geringen Menge $Na_2CO_3$ die $CO_2$-Sensitivität ausgebildet.

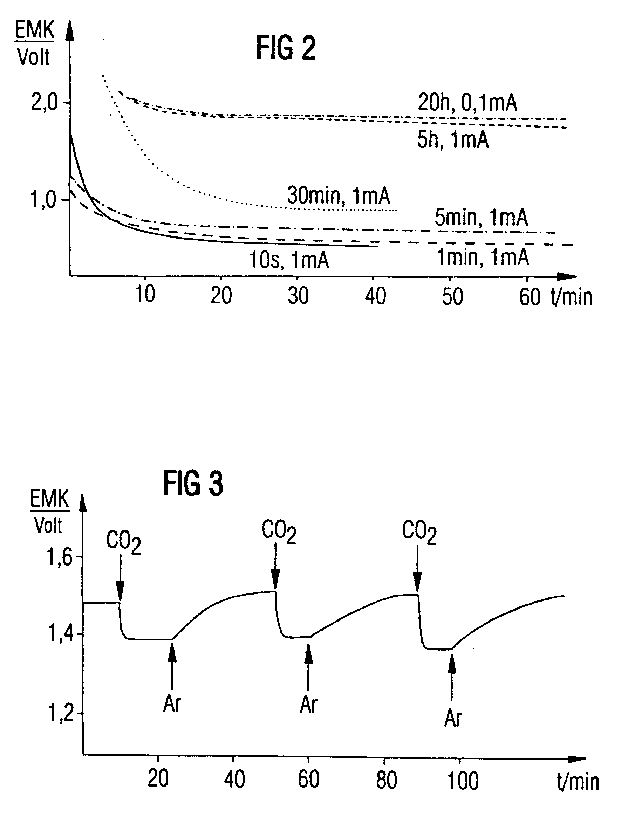

Figur 2 zeigt das zeitliche Verhalten der EMK in Volt als Funktion der Zeit t in Minuten von zylinderförmigen Sinterpreßlingen aus $Na_2Fe^{III}Zr(PO_4)_3$ kontaktiert mit einer Platinpaste, mit einer Länge L = 0,5 cm und einem Durchmesser von 0.93 cm bei 300°C nach der galvanostatischen Polarisation an Luft, deren Dauer jeweils angegeben ist. Man erkennt an den Depolarisationskurven einen kurzzeitigen Abfall von einigen Minuten bis zu einer halben Stunde, der in ein zeitliches Plateau einmündet, das selbst nach wiederholtem Kurzschluß wieder erreicht wird. Darin kommt der Langzeitcharakter der Rückreaktion zwischen den bei der Polarisation gebildeten Reaktionsprodukten zum Ausdruck. Bei einer Sekunde Polarisationszeit mit etwa 8 Volt angelegter Spannung bei Raumtemperatur kann die Entladung über einen Lastwiderstand zeitlich verfolgt werden. Die während der Polarisation transportierte Ladung ist der im Katodenbereich gebildeten Menge $Na_2CO_3$ proportional. Die Höhe der nach dem Abschalten des Polarisationsstromes gemessenen EMK-Werte hängt zunächst von der transportierten Ladungsmenge ab, mündet aber nach entsprechender Dauer der galvanostatischen Polarisation in einem konstanten Wert ein. 5 Stunden Polarisationszeit mit 1 mA bzw. 20 Stunden mit 0,1 mA führen zu etwa der gleichen EMK.

Figur 3 zeigt die EMK in Volt als Funktion der Zeit t in Minuten für eine $Na_2Fe^{III}Zr(PO_4)_3$-Keramik, die eine Stunde lang bei 300°C mit 0,1 mA polarisiert wurde, im Plateau der Polarisationskurve die Abhängigkeit der EMK vom $CO_2$-Partialdruck bei 300 im Wechsel zwischen $CO_2$ (100%) und Luft (0,03%), was den Sensoreffekt erkennen läßt.

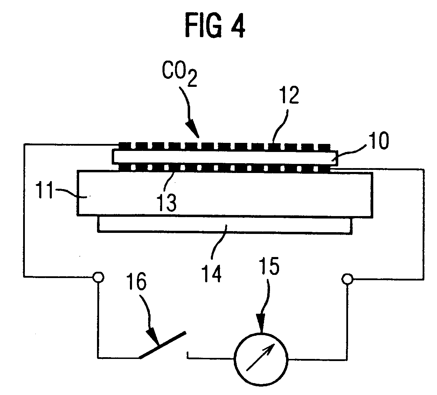

Eine Meßschaltungsanordnung unter Verwendung einer miniaturisierten Ausführung eines erfindungsgemäßen $CO_2$-Sensors ist in der Figur 4 schematisch gezeigt. Ein $CO_2$-Sensorelement 10 aus $Na_2Fe^{III}Zr(PO_4)_3$-Keramik befindet sich auf einem beheizbaren Substrat 11. Auf dem als Träger dienenden Substrat 11 ist eine Platinelektrode 12 vorgesehen, auf die in Dickschichttechnik das Festelektrolytkeramik-Sensorelement 10 aufgebracht ist. Die zweite Elektrode 13 ist auf die Festelektrolytkeramik aufgebracht und porös, d.h. für $CO_2$ durchlässig gestaltet. Ein Heizer 14 ist auf der der Dickschicht 10 abgewandten Seite des Substrats 11, z.B. in Form einer als Mäander ausgebildeten, siebgedruckten Platin-Widerstandsschicht angeordnet. Das Sensorelement 10 ist über einen Zeitschalter 16 an eine Spannungsmeßeinrichtung 15 angekoppelt. Der Zeitschalter 16 ist vorzugsweise periodisch betätigbar, wobei die durch die Spannungsmeßeinrichtung 15 bestimmte Spannung zwischen-den Elektroden 12 und 13 als Maß für den $CO_2$-Gehalt der umgebenden Gasatmosphäre dient.

**Patentansprüche**

1. $CO_2$-Sensor mit einem Alkaliionen-Leitfähigkeit aufweisenden Festelektrolytkeramik-Körper (1; 10), der mit zwei Elektroden (2, 3; 12, 13) aus hinsichtlich der Festelektrolytkeramik inertem Leitermaterial versehen ist,
   **dadurch gekennzeichnet,** daß mindestens eine Elektrode (2; 12) mindestens teildurchlässig ausgebildet ist und daß die Festelektrolytkeramik galvanisch vorpolarisiert ist.

2. $CO_2$-Sensor nach Anspruch 1,
   **dadurch gekennzeichnet,** daß der Festelektrolytkeramik-Körper (1; 10) und die teildurchlässige Elektrode (2; 12) flächenhaft ausgebildet sind.

3. $CO_2$-Sensor nach Anspruch 1 und 2,
   **gekennzeichnet durch** einen Heizer (14) zur Erwärmung des Festelektrolytkeramik-Körpers (10) auf eine vorgegebenen Arbeitstemperatur.

4. $CO_2$-Sensor nach einem der Ansprüche 1 bis 3,
   **dadurch gekennzeichnet,** daß die Festkörperelektrolytkeramik eine Verbindung vom NASICON-Strukturtyp ist.

5. $CO_2$-Sensor nach einem der Ansprüche 1 bis 4,
   **dadurch gekennzeichnet,** daß in die NASICON-Festelektrolytkeramik Übergangsmetall-Kationen hohen Redoxpotentials isomorph eingebaut sind.

6. $CO_2$-Sensor nach Anspruch 5
   **dadurch gekennzeichnet,** daß die Übergangsmetall-Kationen Eisen (III)-Kationen sind.

7. $CO_2$-Sensor nach einem der Ansprüche 1 bis 6,
   **gekennzeichnet durch** eine im Bereich der teildurchlässigen Elektrode (2) durch galvanische Polarisation im Festelektrolyt-Körper (1) in Kontakt mit Luft gebildete Menge an $Na_2CO_3$.

8. $CO_2$-Sensor nach einem der Ansprüche 1 bis 7,
   **dadurch gekennzeichnet,** daß als Elektrodenleitermaterial Platin vorgesehen ist.

9. Meßschaltungsanordnung mit einem $CO_2$-Sensor nach einem der Ansprüche 1 bis 8,
   **gekennzeichnet durch** eine an die Elektroden (12, 13) des Festelektrolytkeramik-Körpers (10) angekoppelte Spannungsmeßeinrichtung (15).

10. Meßschaltungsanordnung nach Anspruch 9,
    **dadurch gekennzeichnet,** daß die Spannungsmeßeinrichtung (15) eine gegen den Innenwiderstand des Festelektrolytkeramik-Körpers (10) hochohmige Einrichtung ist.

11. Meßschaltungsanordnung nach Anspruch 9 und 10,
**dadurch gekennzeichnet,** daß die Spannungsmeßeinrichtung (15) über einen periodisch betätigbaren Zeitschalter (16) an die Elektroden (12, 13) des Festelektrolytkeramik-Körpers (10) angekoppelt ist.

# FIG 1

$$CO_2 + 1/2\ O_2 + 2e + 2\ Na+ \updownarrow Na_2\ CO_3$$

$$Na_2ZrFe^{III}(PO_4)_3$$ Keramik

$$\leftarrow 2Na^+ \longrightarrow$$

$$Na_2ZrFe^{III}(PO_4)_3 \updownarrow 2Na^+ + 2e + 2NaZrFe^{IV}(PO_4)_3$$

$$-\ \ +$$
$$\leftarrow 2e \longrightarrow | \ | \leftarrow 2e \longrightarrow$$

Zellreaktion:

Polarisation

$$CO_2 + 1/2\ O_2 + 2\ Na_2ZrFe^{III}(PO_4)_3 \rightleftharpoons Na_2CO_3 + 2\ NaZrFe^{IV}(PO_4)_3$$

Depolarisation

EP 0 753 738 A1

FIG 2

FIG 3

# FIG 4

Europäisches Patentamt

# EUROPÄISCHER RECHERCHENBERICHT

Nummer der Anmeldung

EP 96 10 9349

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-94 28403 (LES CAPTEURS CAPCO R. & D. INC.)<br>* Seite 13, Zeile 15 - Seite 16 *<br>--- | 1-4,8 | G01N27/407 |
| A | EP-A-0 468 249 (BATTELLE-INSTITUT E.V.)<br>* Spalte 3 - Spalte 4 *<br>--- | 1-4,8 | |
| A | DE-A-42 25 624 (H.H. MÖBIUS)<br>* Spalte 2, Zeile 35 - Spalte 3 *<br>--- | 1-4,8 | |
| A | SOLID STATE IONICS,<br>Bd. 58, Nr. 3/04, 1.Dezember 1992,<br>Seiten 327-331, XP000415540<br>YURIA SAITO ET AL: "IONIC CONDUCTIVITY OF NASICON-TYPE CONDUCTORS NA1.5M0.5ZR1.5(PO4)3 (M:AL3+, GA3+, CR3+, SC3+, FE3+, IN3+, YB3+, Y3+)"<br>* das ganze Dokument *<br>--- | 1-11 | |
| A | SENSORS AND ACTUATORS B,<br>Bd. B09, Nr. 3, 1.Oktober 1992,<br>Seiten 165-170, XP000336292<br>NORIO MIURA ET AL: "HIGH-PERFORMANCE SOLID-ELECTROLYTE CARBON DIOXIDE SENSOR WITH A BINARY CARBONATE ELECTRODE"<br>----- | | RECHERCHIERTE SACHGEBIETE (Int.Cl.6)<br><br>G01N |

Der vorliegende Recherchenbericht wurde für alle Patentansprüche erstellt

| Recherchenort | Abschlußdatum der Recherche | Prüfer |
|---|---|---|
| DEN HAAG | 8.Oktober 1996 | CALLEWAERT, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)